# EUROPEAN PATENT SPECIFICATION

(11) **EP 3 796 731 B1**
(45) Date of publication and mention of the grant of the patent: **01.05.2024**
(21) Application number: 20196901.1
(22) Date of filing: 18.09.2020
(51) Int. Cl.: H04W 72/04, H04W 72/23, H04W 72/50

(54) **ENHANCED GRANT PRIORITIZATION FOR NEW RADIO (NR)**
VERBESSERTE BERECHTIGUNGSPRIORISIERUNG FÜR NEW RADIO (NR)
PRIORISATION AMÉLIORÉE DE SUBVENTIONS POUR NOUVELLE RADIO (NR)

(30) Priority: 18.09.2019 US 201962902254 P
(43) Date of publication of application: 24.03.2021
(73) Proprietor: Intel Corporation, Santa Clara, CA 95054 (US)
(72) Inventor: MIAO, Honglei, 80686 BY Munich (DE)
(74) Representative: Viering, Jentschura & Partner mbB Patent- und Rechtsanwälte

(56) References cited:
- HUAWEI ET AL: "Discussion on supporting multiple active configured grants for TSN", 3GPP DRAFT; R2-1904301 DISCUSSION ON SUPPORTING MULTIPLE ACTIVE CONFIGURED GRANTS FOR TSN, 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Xi'an, China; 20190408 - 20190412 6 April 2019 (2019-04-06), XP051701608, Retrieved from the Internet: URL:http://www.3gpp.org/ftp/Meetings%5F3GP P%5FSYNC/RAN2/Docs/R2%2D1904301%2Ezip [retrieved on 2019-04-06]
- ERICSSON: "Reliability aspects in LCP restriction enhancement", 3GPP DRAFT; R2-1909374 RELIABILITY ASPECTS IN LCP RESTRICTION ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG2, no. Prague, Czech Republic; 20190826 - 20190830 15 August 2019 (2019-08-15), XP051767174, Retrieved from the Internet: URL:http://www.3gpp.org/ftp/tsg_ran/WG2_RL 2/TSGR2_107/Docs/R2-1909374.zip [retrieved on 2019-08-15]
- HUAWEI ET AL: "Discussion on NR support for multiple active UL configured grants", 3GPP DRAFT; R2-1818202, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20181112 - 20181116 12 November 2018 (2018-11-12), XP051557705, Retrieved from the Internet: URL:http://www.3gpp.org/ftp/Meetings%5F3GP P%5FSYNC/RAN2/Docs/R2%2D1818202%2Ezip [retrieved on 2018-11-12]
- ERICSSON: "On MAC aspects of multiple CG", 3GPP DRAFT; R2-1909385 ON MAC ASPECTS OF MULTIPLE CG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 15 August 2019 (2019-08-15), XP051767185, Retrieved from the Internet: URL:http://www.3gpp.org/ftp/tsg_ran/WG2_RL 2/TSGR2_107/Docs/R2-1909385.zip [retrieved on 2019-08-15]

## Description

### PRIORITY CLAIM

This application claims the benefit of priority to United States Provisional Patent Application Serial No. 62/902,254, filed September 18, 2019, and entitled "ENHANCED GRANT PRIORITIZATION FOR NEW RADIO (NR),".

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including 5G new radio (NR) (or 5G-NR) networks and 5G-LTE networks such as 5G NR unlicensed spectrum (NR-U) networks. Other aspects are directed to systems and methods for enhanced grant prioritization for NR and 5G-NR networks.

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in many disparate environments. Fifth-generation (5G) wireless systems are forthcoming and are expected to enable even greater speed, connectivity, and usability. Next generation 5G networks (or NR networks) are expected to increase throughput, coverage, and robustness and reduce latency and operational and capital expenditures. 5G-NR networks will continue to evolve based on 3GPP LTE-Advanced with additional potential new radio access technologies (RATs) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in the unlicensed spectrum without requiring an "anchor" in the licensed spectrum, called MulteFire. MulteFire combines the performance benefits of LTE technology with the simplicity of Wi-Fi-like deployments.

Further enhanced operation of LTE systems in the licensed as well as unlicensed spectrum is expected in future releases and 5G systems. Such enhanced operations can include techniques for enhanced grant prioritization for NR and 5G-NR networks.

In 3GPP written contribution R2-1904301, entitled "Discussion on supporting multiple active configured grants for TSN", the authors discuss how to support multiple active configured grants for a bandwidth part (BWP) of a serving cell for Time Sensitive Networking (TSN). A configuration index is configured for each configuration (identifying respective configurations). Logical channel prioritization (LCP), controlled through RRC signaling, to flag whether a given one of the multiple active configured grants is allowed to be used for transmission. HARQ ID differentiation is supported where there are multiple active configured grants in one BWP. For cases where different configured grants collide in one BWP, the CG with the higher LCP is selected.

In subsequent written contribution R2-1909374, entitled "Reliability aspects in LCP restriction enhancement", the authors address resource conflicts between dynamic grant (DG) and CG PUSCH and conflicts involving multiple CGs. Priority indications are proposed for both DG and CG to inform LCP restriction control over which logical channels should be multiplexed on the grant. RRC signaling is to be used to configure the grant priority indication for CG, while grant priority indication for dynamic grants is signaled in Downlink Control Information (DCI).

### SUMMARY

The invention is an apparatus and computer readable media as defined in the appended claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network, in accordance with some aspects.
FIG. 1B and FIG. 1C illustrate a non-roaming 5G system architecture in accordance with some aspects.
FIG. 2 illustrates a configured grant (CG) based resolution of overlapping CGs, in accordance with some embodiments.
FIG. 3 illustrates a dynamic grant (DG) based resolution of overlapping CGs, in accordance with some embodiments.
FIG. 4 illustrates a media access control (MAC) control element (CE) for logical channel (LCH) grant mapping priority configuration.
FIG. 5 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in or substituted for, those of other aspects.

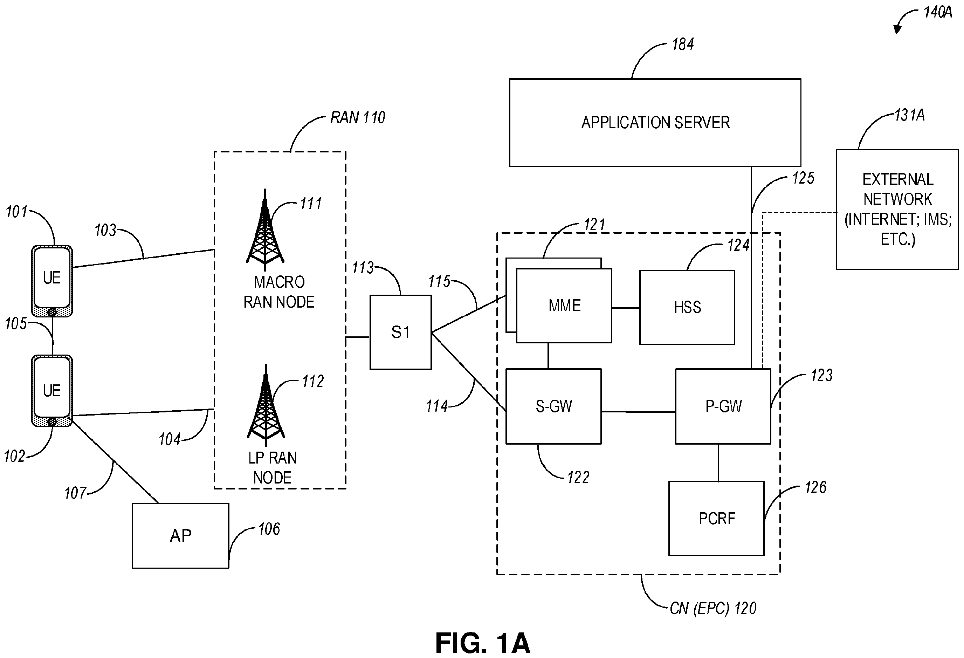

FIG. 1A illustrates an architecture of a network in accordance with some aspects. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of highspeed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some aspects, any of the UEs 101 and 102 can comprise an Internet-of-Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management, and data packet scheduling, and mobility management. In an example, any of the nodes 111 and/or 112 can be a new generation Node-B (gNB), an evolved node-B (eNB), or another type of RAN node.

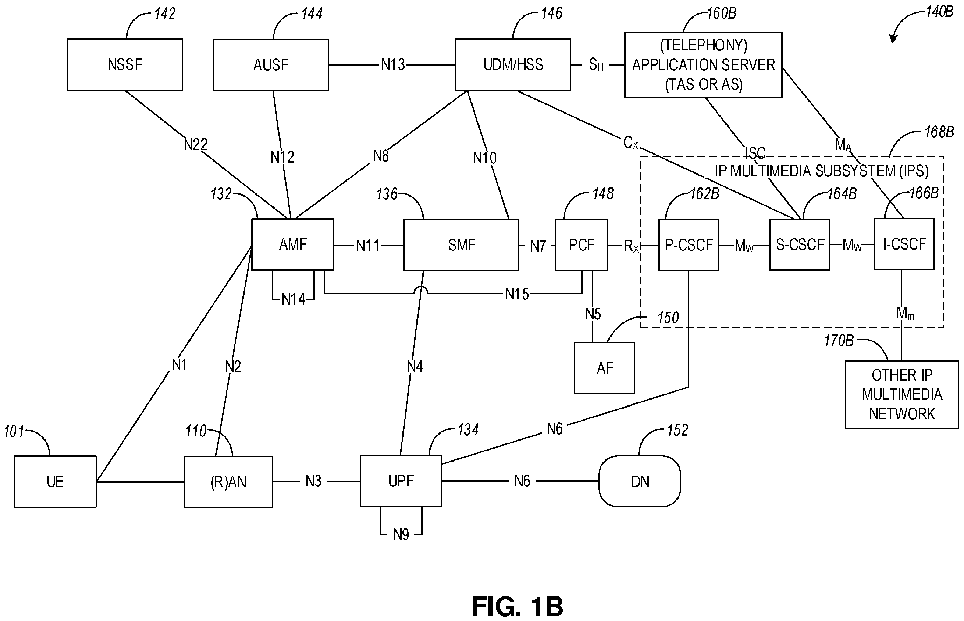

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1C). In this aspect, the S1 interface 113 is split into two parts: the S1-U interface 114, which carries traffic data between the RAN nodes 111 and 112 and the serving gateway (S-GW) 122, and the S 1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network or a 5G network, including a 5G new radio network using communications in the licensed (5G NR) and the unlicensed (5G NR-U) spectrum. One of the current enablers of IoT is the narrowband-IoT (NB-IoT).

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. Referring to FIG. 1B, there is illustrated a 5G system architecture 140B in a reference point representation. More specifically, UE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1B can also be used.

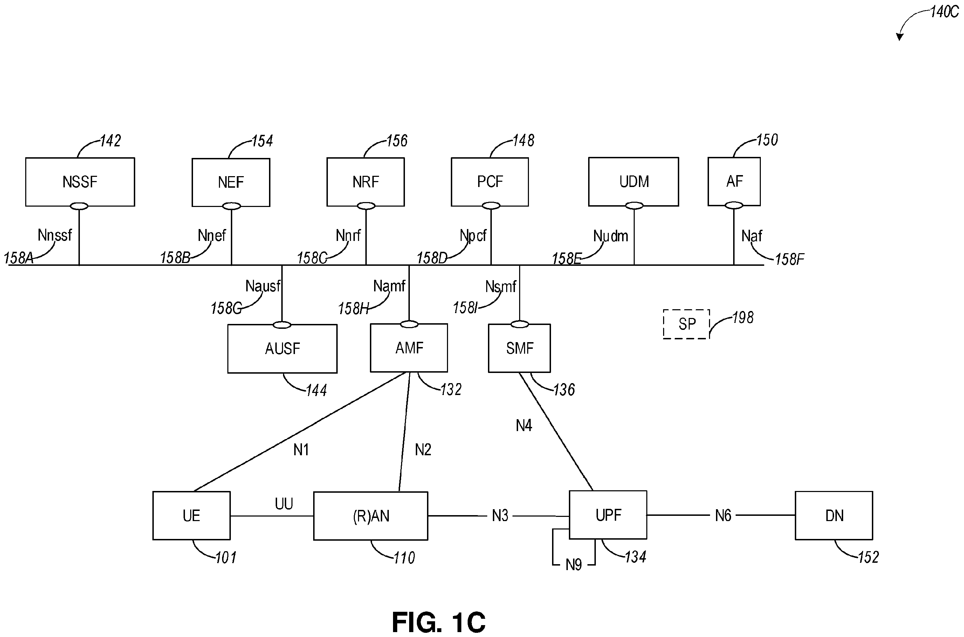

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

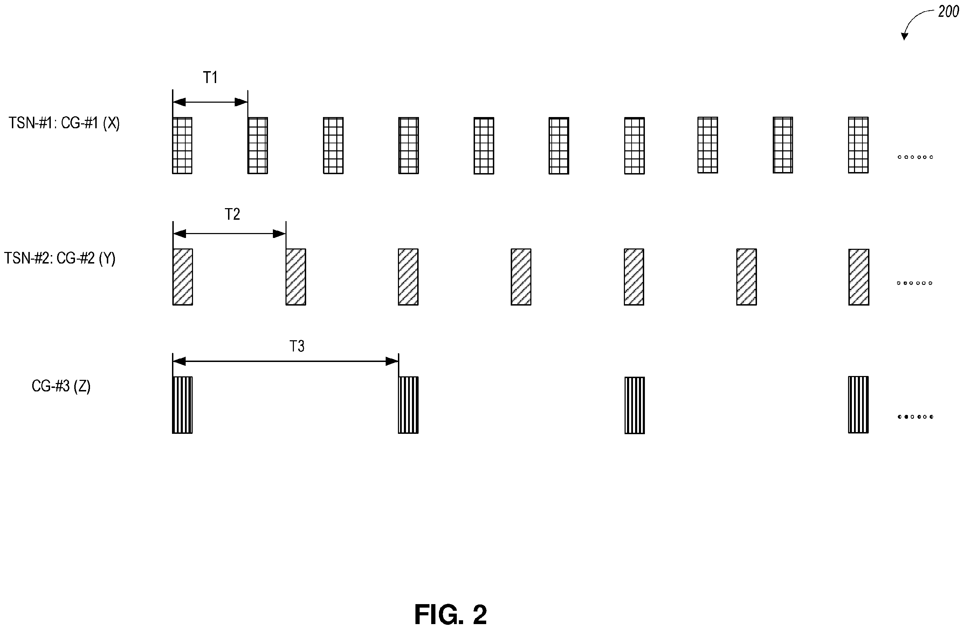

In example embodiments, any of the UEs or base stations discussed in connection with FIG. 1A - FIG. 1C can be configured to operate using the techniques discussed in connection with FIG. 2 - FIG. 4.

In some aspects, enhancements of Configured Grant (CG) are associated with enhanced UL configured grant transmission to support multiple active configured grant type 1 and type 2 configurations for a given bandwidth part (BWP) of a serving cell (which may include V2X use cases).

In some aspects, different timing sensitive network (TSN) streams can be characterized by respective QoS requirements, e.g., reliability and latency, hence each TSN stream may be served by a particular data radio bearer and configured grant (CG) configuration. In some aspects, each CG configuration can be set separately to meet the following different requirements: 1) reliability, e.g. by a different number of repetitions, modulation and coding scheme (MCS) value, MCS table, etc.; 2) latency, e.g. by different PUSCH duration, numerology, and periodicity, etc. In some aspects, a single UE may support multiple TSN streams, characterized by different reliability and latency targets, periodicity, and time-arrival features. In some aspects, each set of CG configuration may be set to support a logical channel (LCH) group, which is comprised of a set of LCHs corresponding to a set of TSN streams. This can be realized by a direct mapping between LCH (associated with a TSN stream) and CG configuration through logical channel prioritization (LCP) restriction.

However, LCP restriction only considers configured grants but not dynamic grant (DG) and so does not work properly in case of configured grant overlapping with high priority and low priority dynamic grant. For two CG occasions corresponding to TSN streams with different periodicities, gNB can anticipate such collision and send an overriding DG for both CG. If not being signaled about DG prioritization, the UE cannot recognize whether gNB allocated low-reliability DG to enhance system spectral efficiency (S.E.) or a robust DG to override both overlapping CG occasions. Therefore it can be beneficial to signal the priority of DG in the scheduling information. It is also likely that many other advanced features need to be dynamically signaled, which would naturally complicate the specifications.

The techniques disclosed herein include methods to configure a grant priority list for an LCH associated with a TSN stream. When multiple grants are overlapping at a time slot for an LCH transmission, depending on the priority of overlapping grants configured for the LCH, the grant with the highest priority may be used for LCH resource allocation. Moreover, a new media access control (MAC) control element (CE) is further proposed to enable the grant priority update in a dynamic manner. This would considerably increase the system's operational flexibility.

The disclosed techniques include the following three methods to realize efficient physical control information signaling transmission.

Method-1: Enhanced configured grant configuration. In this method, the RRC information element (IE) for CG configuration, namely, ConfiguredGrantConfig IE, can be enhanced with an additional parameter defining the index of the respective CG. The configured CG index can be used to identify the CG when it is used in other signaling messages, e.g., RRC, MAC, or DCI signaling.

Method-2: Enhanced logical channel configuration. In this method, each logical channel may be configured with a list of grants, i.e. CG or DG, which can be used for logical channel transmission. The order of the grants in the list determines the priority of the respective grant to be used for the channel allocation in case of multiple overlapping grants occurrence. Specifically, the n^{th} grant in the list has a higher priority than the (n+1)^{th} grant. For a CG, the index of the CG proposed in Method-1 shall be referred to in the list. For a DG, a DG-priority value shall be included in the list so that only those DGs with higher priority than the DG-priority value in the list can be considered for logical channel allocation.

Method-3: MAC CE based reconfiguration of LCH grant mapping priority. In this method, a MAC CE is proposed to reconfigure the mapping priority of allowed grants for a logical channel. In case of quick TSN traffic variation, it can be beneficial for the network to change the mapping priority of allowed grants for some logical channels in a more dynamic manner. To this end, gNB can send a MAC CE to UE to change the mapping priority of allowed grants for a particular logical channel. The grant can be identified by grant-ID described in Method-1 in a certain BWP of a serving cell.

The proposed techniques enable the network to configure a grant priority list for an LCH associated with at least one TSN stream. When multiple grants are overlapping at a time slot for an LCH transmission, depending on the priority of overlapping grants configured for the LCH, the grant with the highest priority shall be used for LCH resource allocation. Moreover, a new MAC CE is further proposed to enable the grant priority update in a dynamic manner. This would considerably increase the system's operational flexibility.

Method-1: Enhanced Configured Grant Configuration

In this method, the RRC information element (IE) for configured grant (CG) configuration, namely, ConfiguredGrantConfig IE, may be enhanced with an additional parameter defining the index of the respective CG. In some aspects, the configured CG index can be used to identify the CG when it is used in other signaling messages, e.g., RRC, MAC, or DCI signaling. Specifically, the following RRC IE can be used to realize this function: 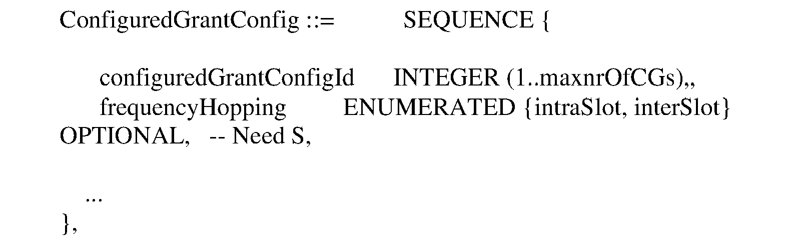 where configuredGrantConfigId defines the index of the CG, and parameter maxnrOfCGs defines the maximum number of CGs supported in the respective uplink bandwidth part.

### Method-2: Enhanced Logical Channel Configuration

In some aspects, each logical channel can be configured with a list of grants, i.e. CG or DG, which can be used for logical channel transmission. The order of the grants in the list determines the priority of the respective grant to be used for the channel allocation in case of multiple overlapping grants occurrence. Specifically, the n^{th} grant in the list has higher priority to be used than the (n+1)^{th} grant in the list. For a CG, the index of the CG proposed in Method-1 shall be referred to in the list. For a DG, a DG-priority value may be included in the list so that only those DGs with higher priority than the DG-priority value in the list can be considered for logical channel allocation. In some aspects, to realize this function, the RRC information element (IE), namely LogicalChannelConfig, can be enhanced as follows: 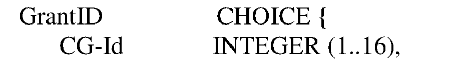 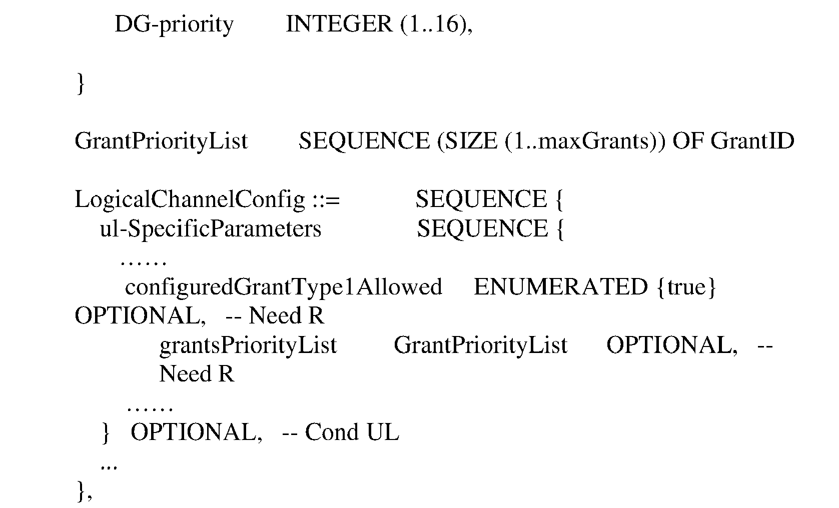 where GrantID defines the ID of grant. For a CG, the CG index is defined as CG-Id for the grant ID. For a DG, a priority value is defined as DG-priority for the grant ID. In some aspects, GrantPriorityList defines a list of GrantIDs. In some aspects, the parameter maxGrants defines the maximum number of grants which can be defined in the list.

In some aspects, LogicalChannelConfig IE configures the logical channel parameter settings. In some aspects, the parameter grantPriorityList defines a list of grants which can be used for the logical channel allocation.

With the above listed RRC configurations, the following options can be used to support overlapping grants prioritization in example aspects.

### Option-1: CG Based Resolution to Overlapping CGs for Multiple TSN Streams

In this option, when an IoT UE transmits several TSN streams of periodic traffic, each TSN stream is associated with a specific radio bearer (RB) corresponding to a particular logical channel. These TSN streams have different periodicities and offsets with respect to the frame boundary. A CG can be configured for each logical channel corresponding to a TSN stream. The overlapping of some CGs can happen periodically and be determined by the network. The network can configure additional CGs whose periodicity is determined by the overlapping periodicity of those TSN streams to override the dedicated CG and accommodate multiple overlapping TSN streams.

FIG. 2 illustrates a diagram 200 of CG based resolution of overlapping CGs, in accordance with some embodiments. As illustrated in FIG. 2, a UE may communicate two TSN streams, each of which is configured with a CG corresponding to a logical channel. Specifically, CG-#1 with CG-index X is associated with TSN stream #1 with periodicity T1 in FIG. 2, and CG-#2 with CG-index Y is associated with TSN stream #2 with periodicity T2 in FIG. 2. It is observed that two TSN streams or CGs overlap with periodicity T3. To solve the CG overlapping issue, in some aspects, the network can configure CG-#3 with CG-index Z and periodicity of T3 to accommodate the traffic of both TSN streams. Therefore, the parameter grants Priority List of logical channels of TSN streams #1 and #2 can be configured as {CG(Z), CG(X)} and {CG(Z), CG(Y)}, respectively. As a result, CG-#3 and CG-#1 may be used for TSN stream #1 mapping, and CG-#3 and CG-#2 may be used for TSN stream #2 mapping. In some aspects, CG-#3 has a higher priority than CG-#1 and CG-#2.

### Option-2: DG Based Resolution to Overlapping CGs for Multiple TSN Streams

In this option, when an IoT UE transmits several TSN streams of periodic traffic, each TSN stream is associated with a specific radio bearer (RB) corresponding to a particular logical channel. The TSN streams may be associated with different periodicities and offsets with respect to the frame boundary. A CG can be configured for each logical channel corresponding to a TSN stream. The overlapping of some CGs can happen periodically and be determined by the network. In the case of CG overlapping occurrence, the network can schedule a DG to override the dedicated CGs and accommodate the traffic of multiple overlapping TSN streams.

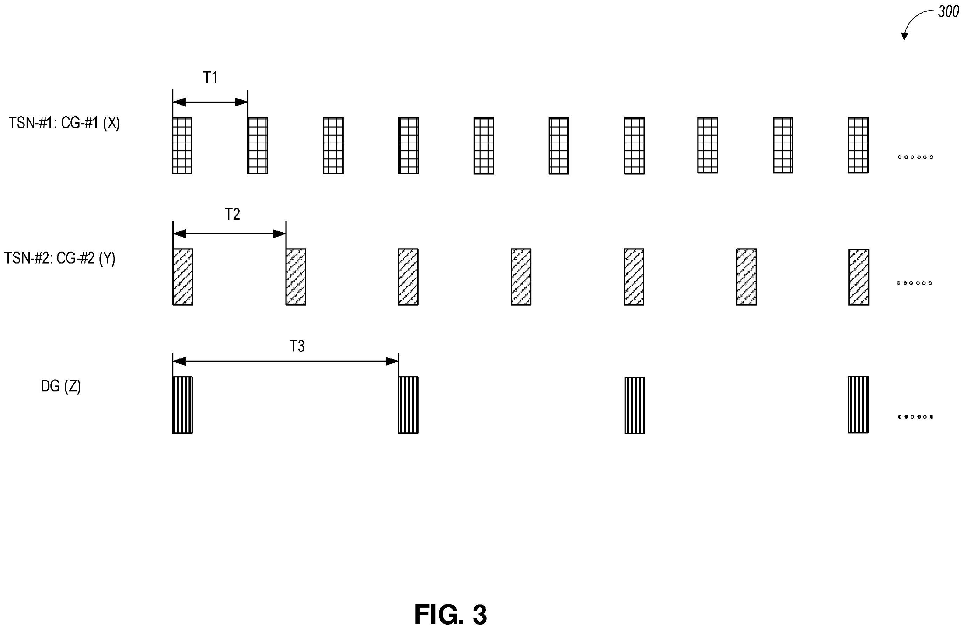

FIG. 3 illustrates a diagram 300 of DG based resolution of overlapping CGs, in accordance with some embodiments. As illustrated in FIG. 3, a UE may communicate two TSN streams, each of which is configured with a CG corresponding to a logical channel. Specifically, CG-#1 with CG-index X is associated with TSN stream #1 with periodicity T1 in FIG. 3, and CG-#2 with CG-index Y is associated with TSN stream #2 with periodicity T2 in FIG. 3. It is observed that two TSN streams or CGs overlap with periodicity T3. To solve the CG overlapping issue, in some aspects, the network (e.g., a gNB) can schedule a DG with priority Z at those CG overlapping occurrences to accommodate the traffic of both TSN streams. Therefore the parameter grants Priority List of logical channels of TSN streams #1 and #2 can be configured as {DG(Z), CG(X)} and {DG(Z), CG(Y)}, respectively. As a result, DG with priority Z and CG-#1 may be used for TSN stream #1 mapping, and DG with priority Z and CG-#2 may be used for TSN stream #2 mapping. In some aspects, DG with priority Z has a higher priority than CG-#1 and CG-#2.

### Method-3: MAC CE Based Reconfiguration of LCH Grant Mapping Priority

In this method, a MAC CE may be used to reconfigure the mapping priority of allowed grants for a logical channel. In case of quick TSN traffic variation, it can be beneficial for the network to change the mapping priority of allowed grants for some logical channels in a more dynamic manner. To this end, a gNB can send a MAC CE to UE to change the mapping priority of allowed grants for a particular logical channel. In some aspects, the grant can be identified by grant-ID described in Method-1 in a certain BWP of a serving cell.

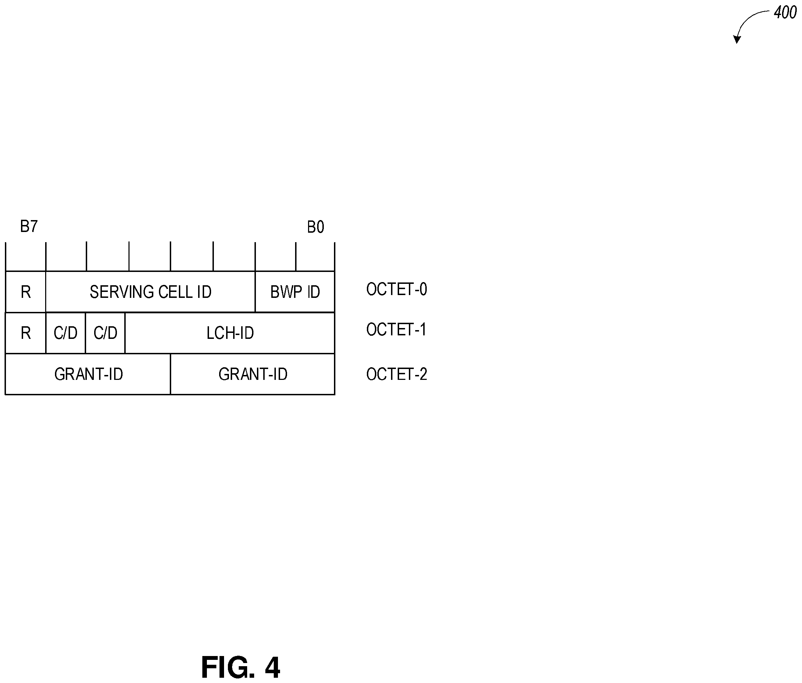

FIG. 4 illustrates a diagram 400 of a MAC CE for LCH grant mapping priority configuration. As shown in FIG. 4, the proposed MAC CE for LCH grant mapping priority configuration includes the following fields:

Serving Cell ID: This field indicates the identity of the Serving Cell for which the MAC CE applies. The length of the field is 5 bits;

BWP ID: This field indicates a UL BWP for which the MAC CE applies. The length of the BWP ID field is 2 bits;

LCH ID: This field indicates a logical channel ID. The length of the LCH ID field is 5 bits;

C/D: This field indicates whether the associated grant is a CG or DG. When the bit is set to 1, a CG is referred, otherwise, a DG is referred. C/G in b5 corresponds to the CG/DG with the high priority, whose CG-index or DG-priority is signaled in b0-b3 in Octet-2. C/G in b6 corresponds to the CG/DG with the low priority, whose CG-index or DG-priority is signaled in b4-b7 in Octet-2. The length of the C/D field is 1 bit;

Grant-ID: This field indicates a CG-index or DG-priority depending on the corresponding C/D indicator bit. The length of the Grant-ID field is 4 bits; and
R: Reserved bit, set to "0".

In some aspects, upon the reception of the above MAC CE at slot n, a UE may update the grants mapping priority for the signaled LCH at slot n+k, e.g., k = 3, where k may be defined in a 3GPP standard.

In some aspects, an RRC IE for CG configuration, namely, ConfiguredGrantConfig IE, can be enhanced with an additional parameter defining the index of the respective CG. In some aspects, the configured CG index can be used to identify the CG when it is used in other signaling messages, e.g., RRC, MAC, or DCI signaling. In some aspects, each logical channel can be configured with a list of grants, i.e. CG and/or DG, which can be used for logical channel transmission. In some aspects, the order of the grants in the list determines the priority of the respective grant to be used for the channel allocation in case of multiple overlapping grants occurrence. Specifically, the n^{th} grant in the list has higher priority to be used than the (n+1)^{th} grant in the list. In some aspects, for a CG, the index of the CG proposed in Method-1 shall be referred to in the list. In some aspects, for a DG, a DG-priority value shall be included in the list so that only those DGs with higher priority than the DG-priority value in the list can be considered for logical channel allocation.

In some aspects, when an IoT UE transmits several TSN streams of periodic traffic, each TSN stream is associated with a specific radio bearer (RB) corresponding to a particular logical channel. These TSN streams have different periodicities and offsets with respect to the frame boundary. A CG can be configured for each logical channel corresponding to a TSN stream.

In some aspects, the overlapping of some CGs can happen periodically and be determined by the network. The network can configure additional CGs whose periodicity is determined by the overlapping periodicity of those TSN streams to override the dedicated CG and accommodate multiple overlapping TSN streams. In some aspects, in case of CG overlapping occurrence, the network can schedule a DG to override the dedicated CGs and accommodate the traffic of multiple overlapping TSN streams.

In some aspects, a MAC CE can be used to reconfigure the mapping priority of allowed grants for a logical channel. In case of quick TSN traffic variation, it can be beneficial for the network to change the mapping priority of allowed grants for some logical channels in a more dynamic manner. In some aspects, a gNB can send a MAC CE to UE to change the mapping priority of allowed grants for a particular logical channel. The grant can be identified by grant-ID described in Method-1 in a certain BWP of a serving cell. The proposed MAC CE for LCH grant mapping priority configuration is illustrated in FIG. 4. In some aspects, Serving Cell ID in the MAC CE indicates the identity of the Serving Cell for which the MAC CE applies. The length of the field is 5 bits. In some aspects, BWP ID in the MAC CE indicates a UL BWP for which the MAC CE applies. The length of the BWP ID field is 2 bits. In some aspects, the LCH ID in the MAC CE indicates a logical channel ID. The length of the LCH ID field is 5 bits. In some aspects, C/D in MAC CE indicates whether the associated grant is a CG or DG. When the bit is set to 1, a CG is referred, otherwise, a DG is referred. C/G in b5 corresponds to the CG/DG with the high priority, whose CG-index or DG-priority is signaled in b0-b3 in Octet-2. C/G in b6 corresponds to the CG/DG with the low priority, whose CG-index or DG-priority is signaled in b4-b7 in Octet-2. The length of the C/D field is 1 bit. In some aspects, Grant-ID in the MAC CE indicates a CG-index or DG-priority depending on the corresponding C/D indicator bit. The length of the Grant-ID field is 4 bits. In some aspects, R in the MAC CE defines reserved bit, it is set to "0". In some aspects, upon the reception of the above MAC CE at slot n, the UE may update the grants mapping priority for the signaled LCH at slot n+k, e.g., k = 3, where k is defined in the standard.

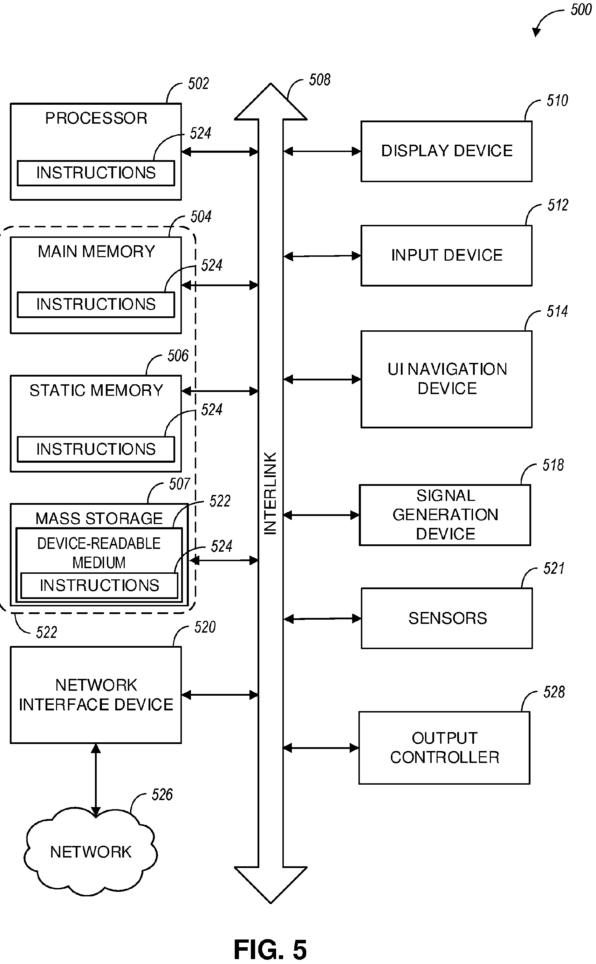

FIG. 5 illustrates a block diagram of a communication device such as an evolved Node-B (eNB), a next generation Node-B (gNB), an access point (AP), a wireless station (STA), a mobile station (MS), or a user equipment (UE), in accordance with some aspects and to perform one or more of the techniques disclosed herein. In alternative aspects, the communication device 500 may operate as a standalone device or may be connected (e.g., networked) to other communication devices.

Circuitry (e.g., processing circuitry) is a collection of circuits implemented in tangible entities of the device 500 that include hardware (e.g., simple circuits, gates, logic, etc.). Circuitry membership may be flexible over time. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 500 follow.

In some aspects, the device 500 may operate as a standalone device or may be connected (e.g., networked) to other devices. In a networked deployment, the communication device 500 may operate in the capacity of a server communication device, a client communication device, or both in server-client network environments. In an example, the communication device 500 may act as a peer communication device in a peer-to-peer (P2P) (or other distributed) network environment. The communication device 500 may be a UE, eNB, PC, a tablet PC, an STB, a PDA, a mobile telephone, a smartphone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), and other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at different times. The software may accordingly configure a hardware processor, for example, to constitute a particular module at one instance of time and to constitute a different module at a different instance of time.

The communication device (e.g., UE) 500 may include a hardware processor 502 (e.g., a central processing unit (CPU), a graphics processing unit (GPU), a hardware processor core, or any combination thereof), a main memory 504, a static memory 506, and mass storage 507 (e.g., hard drive, tape drive, flash storage, or other block or storage devices), some or all of which may communicate with each other via an interlink (e.g., bus) 508.

The communication device 500 may further include a display device 510, an alphanumeric input device 512 (e.g., a keyboard), and a user interface (UI) navigation device 514 (e.g., a mouse). In an example, the display device 510, input device 512, and UI navigation device 514 may be a touchscreen display. The communication device 500 may additionally include a signal generation device 518 (e.g., a speaker), a network interface device 520, and one or more sensors 521, such as a global positioning system (GPS) sensor, compass, accelerometer, or another sensor. The communication device 500 may include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 507 may include a communication device-readable medium 522, on which is stored one or more sets of data structures or instructions 524 (e.g., software) embodying or utilized by any one or more of the techniques or functions described herein. In some aspects, registers of the processor 502, the main memory 504, the static memory 506, and/or the mass storage 507 may be, or include (completely or at least partially), the device-readable medium 522, on which is stored the one or more sets of data structures or instructions 524, embodying or utilized by any one or more of the techniques or functions described herein. In an example, one or any combination of the hardware processor 502, the main memory 504, the static memory 506, or the mass storage 516 may constitute the device-readable medium 522.

As used herein, the term "device-readable medium" is interchangeable with "computer-readable medium" or "machine-readable medium". While the communication device-readable medium 522 is illustrated as a single medium, the term "communication device-readable medium" may include a single medium or multiple media (e.g., a centralized or distributed database, and/or associated caches and servers) configured to store the one or more instructions 524. The term "communication device-readable medium" is inclusive of the terms "machine-readable medium" or "computer-readable medium", and may include any medium that is capable of storing, encoding, or carrying instructions (e.g., instructions 524) for execution by the communication device 500 and that cause the communication device 500 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 524 may further be transmitted or received over a communications network 526 using a transmission medium via the network interface device 520 utilizing any one of a number of transfer protocols. In an example, the network interface device 520 may include one or more physical jacks (e.g., Ethernet, coaxial, or phone jacks) or one or more antennas to connect to the communications network 526. In an example, the network interface device 520 may include a plurality of antennas to wirelessly communicate using at least one of single-input-multiple-output (SIMO), MIMO, or multiple-input-single-output (MISO) techniques. In some examples, the network interface device 520 may wirelessly communicate using Multiple User MIMO techniques.

The term "transmission medium" shall be taken to include any intangible medium that is capable of storing, encoding, or carrying instructions for execution by the communication device 500, and includes digital or analog communications signals or another intangible medium to facilitate communication of such software. In this regard, a transmission medium in the context of this disclosure is a device-readable medium.

## Claims

1. An apparatus to be used in a user equipment, UE, the apparatus comprising:
processing circuitry (502), adapted to configure the UE for enhanced uplink, UL, configured grant transmission supporting multiple configured grant configurations in a 5G-New Radio, NR, communication network, the processing circuitry further adapted to to:
decode first radio resource control, RRC, signaling, the first RRC signaling including the multiple configured grant configurations for a single bandwidth part, BWP, of a serving cell and each configured grant configuration of the multiple configured grant configurations including a corresponding configuration index identifying the configured grant configuration;
decode second RRC signaling, the second RRC signaling including logical channel configurations for respective logical channels, each logical channel being configured with a list of allowed configured grant configurations of the multiple configured grant configurations, each of the allowed configured grant configurations identified by the corresponding configuration index, wherein the second RRC signaling further includes a Logical Channel Configuration information element; and
encode a physical uplink shared channel, PUSCH, for a UL transmission using one of the allowed configured grant configurations; and
a memory (504) coupled to the processing circuitry (502) and configured to store the first and second RRC signaling,
wherein the Logical Channel Configuration information element further includes a priority value specifying priority of a dynamic grant, DG, for the UE.

2. The apparatus of claim 1, wherein the first RRC signaling further includes a Configured Grant Configuration information element corresponding to one of the multiple configured grant configurations.

3. The apparatus of claim 1 or claim 2, wherein the first RRC signaling defines a maximum number of the multiple configured grant configurations for the single BWP of the serving cell.

4. The apparatus of any one of claims 1 to 3, wherein the logical channel configurations in the second RRC signaling includes configured grant, CG, and dynamic grant, DG, configurations for a UL logical channel transmission associated with a timing sensitive network, TSN, stream.

5. The apparatus of claim 4, wherein the list of allowed configured grant configurations includes a corresponding DG-priority value for each of the DG configurations, and wherein the processing circuitry is further adapted to:
select a DG configuration of the DG configurations based on the corresponding DG-priority value.

6. The apparatus of any one of claims 1 to 5, wherein the processing circuitry is further adapted to:
configure a plurality of logical channels for a corresponding plurality of timing sensitive network, TSN, streams using the first and second RRC signaling; and
wherein each TSN stream of the plurality of TSN streams is associated with a specific radio bearer, RB, corresponding to a logical channel of the plurality of logical channels.

7. The apparatus of any one of claims 1 to 6, wherein the processing circuitry is further adapted to:
decode a media access control, MAC, control element, CE; and
reconfigure mapping priority of the allowed grant configurations based on the decoded MAC CE.

8. The apparatus of claim 7, wherein the MAC CE comprises:
a serving cell ID, the serving cell ID indicating an identity of a serving cell for which the MAC CE applies; and
a BWP ID, the BWP ID indicating a UL BWP for which the MAC CE applies.

9. The apparatus of any one of claims 1 to 8, further comprising transceiver circuitry coupled to the processing circuitry; and, one or more antennas coupled to the transceiver circuitry.

10. A computer-readable medium that carries instructions for execution by one or more processors of a user equipment, UE, the instructions to configure the UE for enhanced uplink, UL, configured grant transmission supporting multiple configured grant configurations in a 5G-New Radio, NR, communication network, and to cause the UE to:
decode first radio resource control, RRC, signaling, the first RRC signaling including the multiple configured grant configurations for a single bandwidth part, BWP, of a serving cell and each configured grant configuration of the multiple configured grant configurations including a corresponding configuration index identifying the configured grant configuration;
decode second RRC signaling, the second RRC signaling including logical channel configurations for respective logical channels, each logical channel being configured with a list of allowed configured grant configurations of the multiple configured grant configurations, each of the allowed configured grant configurations identified by the corresponding configuration index, wherein the second RRC signaling further includes a Logical Channel Configuration information element; and
encode a physical uplink shared channel, PUSCH, for a UL transmission using one of the allowed configured grant configurations,
wherein the Logical Channel Configuration information element further includes a priority value specifying priority of a dynamic grant, DG, for the UE.

11. The computer-readable medium of claim 10, wherein the first RRC signaling further includes a Configured Grant Configuration information element corresponding to one of the multiple configured grant configurations.

12. A computer-readable medium that carries instructions for execution by one or more processors of a Next Generation Node-B, gNB, the instructions to configure the gNB for enhanced uplink, UL, configured grant transmission supporting multiple configured grant configurations in a 5G-New Radio, NR, communication network, and to cause the gNB to:
encode first radio resource control, RRC, signaling for transmission to a user equipment, UE, the first RRC signaling including the multiple configured grant configurations for a single bandwidth part, BWP, of a serving cell of the gNB, and each configured grant configuration of the multiple configured grant configurations including a corresponding configuration index identifying the configured grant configuration;
encode second RRC signaling for transmission to the UE, the second RRC signaling including logical channel configurations for respective logical channels, each logical channel being configured with a list of allowed configured grant configurations of the multiple configured grant configurations, each of the allowed configured grant configurations identified by the corresponding configuration index, wherein the second RRC signaling further includes a Logical Channel Configuration information element; and
decode a physical uplink shared channel, PUSCH, associated with a UL transmission from the UE, the UL transmission using one of the allowed configured grant configurations
wherein the Logical Channel Configuration information element further includes a priority value specifying priority of a dynamic grant, DG, for the UE.

## Patentansprüche

1. Vorrichtung zur Verwendung in einem Benutzergerät (UE), die Vorrichtung umfassend:
eine Verarbeitungsschaltung (502), die dazu angepasst ist, das UE für eine erweiterte Uplink (UL)-konfigurierte Berechtigungsübertragung zu konfigurieren, die mehrere konfigurierte Berechtigungskonfigurationen in einem 5G-New Radio (NR)-Kommunikationsnetzwerk unterstützt, wobei die Verarbeitungsschaltung ferner dazu angepasst ist, um: die Signalisierung der ersten Funkressourcensteuerung (RRC) zu dekodieren, wobei die erste RRC-Signalisierung die mehreren konfigurierten Berechtigungskonfigurationen für einen einzelnen Bandbreitenteil (BWP) einer bedienenden Zelle beinhaltet und jede konfigurierte Berechtigungskonfiguration der mehreren konfigurierten Berechtigungskonfigurationen einen entsprechenden Konfigurationsindex beinhaltet, der die konfigurierte Berechtigungskonfiguration identifiziert;
die zweite RRC-Signalisierung zu dekodieren, wobei die zweite RRC-Signalisierung logische Kanalkonfigurationen für jeweilige logische Kanäle beinhaltet, wobei jeder logische Kanal mit einer Liste zulässiger konfigurierter Berechtigungskonfigurationen der mehreren konfigurierten Berechtigungskonfigurationen konfiguriert wird, wobei jede der zulässigen konfigurierten Berechtigungskonfigurationen durch den entsprechenden Konfigurationsindex identifiziert wird, wobei die zweite RRC-Signalisierung ferner ein Informationselement für die logische Kanalkonfiguration beinhaltet; und
einen gemeinsamen physischen Uplink-Kanal (PUSCH) für eine UL-Übertragung unter Verwendung einer der zulässigen konfigurierten Berechtigungskonfigurationen zu kodieren; und
einen Speicher (504), der mit der Verarbeitungsschaltung (502) gekoppelt und konfiguriert ist, um die erste und zweite RRC-Signalisierung zu speichern, wobei das Informationselement für die logische Kanalkonfiguration ferner einen Prioritätswert beinhaltet, der die Priorität einer dynamischen Berechtigung (DG) für das UE festlegt.

2. Vorrichtung nach Anspruch 1, wobei die erste RRC-Signalisierung ferner ein Informationselement für die konfigurierte Berechtigungskonfiguration beinhaltet, das einer der mehreren konfigurierten Berechtigungskonfigurationen entspricht.

3. Vorrichtung nach Anspruch 1 oder Anspruch 2, wobei die erste RRC-Signalisierung eine maximale Anzahl der mehreren konfigurierten Berechtigungskonfigurationen für den einzelnen BWP der bedienenden Zelle definiert.

4. Vorrichtung nach einem der Ansprüche 1 bis 3, wobei die logischen Kanalkonfigurationen in der zweiten RRC-Signalisierung Konfigurationen für eine konfigurierte Berechtigung (CG) und dynamische Berechtigung (DG) für eine logische UL-Kanalübertragung beinhalten, die einem Strom eines zeitabhängigen Netzwerks (TSN) zugeordnet ist.

5. Vorrichtung nach Anspruch 4, wobei die Liste der zulässigen konfigurierten Berechtigungskonfigurationen einen entsprechenden DG-Prioritätswert für jede der DG-Konfigurationen beinhaltet, und wobei die Verarbeitungsschaltung ferner dazu angepasst ist, um:
eine DG-Konfiguration der DG-Konfigurationen basierend auf dem entsprechenden DG-Prioritätswert auszuwählen.

6. Vorrichtung nach einem der Ansprüche 1 bis 5, wobei die Verarbeitungsschaltung ferner dazu angepasst ist, um:
eine Vielzahl von logischen Kanälen für eine entsprechende Vielzahl von zeitabhängigen Netzwerk (TSN)-Strömen unter Verwendung der ersten und zweiten RRC-Signalisierung zu konfigurieren; und
wobei jeder TSN-Strom der Vielzahl von TSN-Strömen einem bestimmten Funkträger (RB) zugeordnet ist, der einem logischen Kanal der Vielzahl von logischen Kanälen entspricht.

7. Vorrichtung nach einem der Ansprüche 1 bis 6, wobei die Verarbeitungsschaltung ferner dazu angepasst ist, um:
ein Steuerelement (CE) einer Medienzugriffssteuerung (MAC) zu dekodieren; und
die Zuordnungspriorität der zulässigen Berechtigungskonfigurationen basierend auf dem dekodierten MAC-CE neu zu konfigurieren.

8. Vorrichtung nach Anspruch 7, wobei das MAC-CE ferner umfasst:
eine bedienende Zellen-ID, wobei die bedienende Zellen-ID eine Kennung einer bedienenden Zelle angibt, für die das MAC-CE gilt; und
eine BWP-ID, wobei die BWP-ID einen UL-BWP angibt, für den das MAC-CE gilt.

9. Vorrichtung nach einem der Ansprüche 1 bis 8, ferner umfassend eine Transceiver-Schaltung, die mit der Verarbeitungsschaltung gekoppelt ist; und eine oder mehrere Antennen, die mit der Transceiver-Schaltung gekoppelt sind.

10. Computerlesbares Medium, das Anweisungen zur Ausführung durch einen oder mehrere Prozessoren eines Benutzergeräts (UE) trägt, wobei die Anweisungen dazu dienen, das UE für eine erweiterte Uplink (UL)-konfigurierte Berechtigungsübertragung zu konfigurieren, die mehrere konfigurierte Berechtigungskonfigurationen in einem 5G-New Radio (NR)-Kommunikationsnetzwerk unterstützt, und das UE dazu veranlassen:
die Signalisierung der ersten Funkressourcensteuerung (RRC) zu dekodieren, wobei die erste RRC-Signalisierung die mehreren konfigurierten Berechtigungskonfigurationen für einen einzelnen Bandbreitenteil (BWP) einer bedienenden Zelle beinhaltet und jede konfigurierte Berechtigungskonfiguration der mehreren konfigurierten Berechtigungskonfigurationen einen entsprechenden Konfigurationsindex beinhaltet, der die konfigurierte Berechtigungskonfiguration identifiziert;
die zweite RRC-Signalisierung zu dekodieren, wobei die zweite RRC-Signalisierung logische Kanalkonfigurationen für jeweilige logische Kanäle beinhaltet, wobei jeder logische Kanal mit einer Liste zulässiger konfigurierter Berechtigungskonfigurationen der mehreren konfigurierten Berechtigungskonfigurationen konfiguriert wird, wobei jede der zulässigen konfigurierten Berechtigungskonfigurationen durch den entsprechenden Konfigurationsindex identifiziert wird, wobei die zweite RRC-Signalisierung ferner ein Informationselement für die logische Kanalkonfiguration beinhaltet; und
einen gemeinsamen physischen Uplink-Kanal (PUSCH) für eine UL-Übertragung unter Verwendung einer der zulässigen konfigurierten Berechtigungskonfigurationen zu kodieren, wobei das Informationselement für die logische Kanalkonfiguration ferner einen Prioritätswert beinhaltet, der die Priorität einer dynamischen Berechtigung (DG) für das UE festlegt.

11. Computerlesbares Medium nach Anspruch 10, wobei die erste RRC-Signalisierung ferner ein Informationselement für die konfigurierte Berechtigungskonfiguration beinhaltet, das einer der mehreren konfigurierten Berechtigungskonfigurationen entspricht.

12. Computerlesbares Medium, das Anweisungen zur Ausführung durch einen oder mehrere Prozessoren eines Next Generation Node-B (gNB) trägt, wobei die Anweisungen dazu dienen, den gNB für eine erweiterte Uplink (UL)-konfigurierte Berechtigungsübertragung zu konfigurieren, die mehrere konfigurierte Berechtigungskonfigurationen in einem 5G-New Radio (NR)-Kommunikationsnetzwerk unterstützt, und den gNB veranlassen:
die Signalisierung der ersten Funkressourcensteuerung (RRC) zur Übertragung an ein Benutzergerät (UE) zu kodieren, wobei die erste RRC-Signalisierung die mehreren konfigurierten Berechtigungskonfigurationen für einen einzelnen Bandbreitenteil (BWP) einer bedienenden Zelle des gNB beinhaltet und jede konfigurierte Berechtigungskonfiguration der mehreren konfigurierten Berechtigungskonfigurationen einen entsprechenden Konfigurationsindex beinhaltet, der die konfigurierte Berechtigungskonfiguration identifiziert;
die zweite RRC-Signalisierung zur Übertragung an ein Benutzergerät (UE) zu kodieren, wobei die zweite RRC-Signalisierung logische Kanalkonfigurationen für jeweilige logische Kanäle beinhaltet, wobei jeder logische Kanal mit einer Liste zulässiger konfigurierter Berechtigungskonfigurationen der mehreren konfigurierten Berechtigungskonfigurationen konfiguriert wird, wobei jede der zulässigen konfigurierten Berechtigungskonfigurationen durch den entsprechenden Konfigurationsindex identifiziert wird, wobei die zweite RRC-Signalisierung ferner ein Informationselement für die logische Kanalkonfiguration beinhaltet; und
einen gemeinsamen physischen Uplink-Kanal (PUSCH) zu dekodieren, der einer UL-Übertragung von dem UE zugeordnet ist, wobei die UL-Übertragung eine der zulässigen konfigurierten Berechtigungskonfigurationen verwendet, wobei das Informationselement für die logische Kanalkonfiguration ferner einen Prioritätswert beinhaltet, der die Priorität einer dynamischen Berechtigung (DG) für das UE festlegt.

## Revendications

1. Appareil destiné à être utilisé dans un équipement utilisateur, noté UE, l'appareil comprenant :
une circuiterie de traitement (502), adaptée à configurer l'UE pour une transmission à autorisation préalable configurée en liaison montante, notée UL, améliorée prenant en charge de multiples configurations d'autorisation préalable configurée dans un réseau de communication 5G-New Radio, noté NR, la circuiterie de traitement étant adaptée en outre à :
décoder une première signalisation sous protocole de contrôle des ressources radio, noté RRC, la première signalisation RRC comportant les multiples configurations d'autorisation préalable configurée pour une unique partie de bande passante, notée BWP, d'une cellule de desserte et chaque configuration d'autorisation préalable configurée parmi les multiples configurations d'autorisation préalable configurée comportant un indice de configuration correspondant identifiant la configuration d'autorisation préalable configurée ;
décoder une deuxième signalisation RRC, la deuxième signalisation RRC comportant des configurations de canal logique pour des canaux logiques respectifs, chaque canal logique étant configuré avec une liste de configurations d'autorisation préalable configurée permises parmi les multiples configurations d'autorisation préalable configurée, chacune des configurations d'autorisation préalable configurée permises étant identifiée par l'indice de configuration correspondant, la deuxième signalisation RRC comportant en outre un élément d'information du type Configuration de Canal Logique ; et
coder un canal physique partagé en liaison montante, noté PUSCH, pour une transmission en UL au moyen d'une des configurations d'autorisation préalable configurée permises ; et
une mémoire (504) couplée à la circuiterie de traitement (502) et configurée pour stocker la première et la deuxième signalisation RRC, l'élément d'information du type Configuration de Canal Logique comportant en outre une valeur de priorité stipulant une priorité d'une autorisation préalable dynamique, notée DG, pour l'UE.

2. Appareil selon la revendication 1, la première signalisation RRC comportant en outre un élément d'information du type Configuration d'Autorisation Préalable Configurée correspondant à l'une des multiples configurations d'autorisation préalable configurée.

3. Appareil selon la revendication 1 ou la revendication 2, la première signalisation RRC définissant un nombre maximal des multiples configurations d'autorisation préalable configurée pour l'unique BWP de la cellule de desserte.

4. Appareil selon l'une quelconque des revendications 1 à 3, les configurations de canal logique dans la deuxième signalisation RRC comportant des configurations d'autorisation préalable configurée, notée CG, et d'autorisation préalable dynamique, notée DG, pour une transmission de canal logique en UL associée à une flux de réseau sensible au temps, noté TSN.

5. Appareil selon la revendication 4, la liste de configurations d'autorisation préalable configurée permises comportant une valeur de priorité de DG correspondante pour chacune des configurations de DG, et la circuiterie de traitement étant adaptée en outre à :
sélectionner une configuration de DG parmi les configurations de DG sur la base de la valeur de priorité de DG correspondante.

6. Appareil selon l'une quelconque des revendications 1 à 5, la circuiterie de traitement étant adaptée en outre à :
configurer une pluralité de canaux logiques pour une pluralité correspondante de flux de réseau sensible au temps, noté TSN, au moyen de la première et de la deuxième signalisation RRC ; et
chaque flux de TSN de la pluralité de flux de TSN étant associé à un support radio, noté RB, spécifique correspondant à un canal logique parmi la pluralité de canaux logiques.

7. Appareil selon l'une quelconque des revendications 1 à 6, la circuiterie de traitement étant adaptée en outre à :
décoder un élément de contrôle, noté CE, de la couche de contrôle d'accès au support, notée MAC, noté MAC CE ; et
reconfigurer une priorité de mappage des configurations d'autorisation préalable permises sur le MAC CE décodé.

8. Appareil selon la revendication 7, le MAC CE comprenant :
un ID de cellule de desserte, l'ID de cellule de desserte indiquant une identité d'une cellule de desserte pour laquelle le MAC CE s'applique ; et
un ID de BWP, l'ID de BWP indiquant une BWP en UL pour laquelle le MAC CE s'applique.

9. Appareil selon l'une quelconque des revendications 1 à 8, comprenant en outre une circuiterie émetteur-récepteur couplée à la circuiterie de traitement ; et une ou plusieurs antennes couplées à la circuiterie émetteur-récepteur.

10. Support lisible par ordinateur portant des instructions destinées à être exécutées par un ou plusieurs processeurs d'un équipement utilisateur, noté UE, les instructions servant à configurer l'UE pour une transmission à autorisation préalable configurée en liaison montante, notée UL, améliorée prenant en charge de multiples configurations d'autorisation préalable configurée dans un réseau de communication 5G-New Radio, noté NR, et pour amener l'UE à :
décoder une première signalisation sous protocole de contrôle des ressources radio, noté RRC, la première signalisation RRC comportant les multiples configurations d'autorisation préalable configurée pour une seule partie de bande passante, notée BWP, d'une cellule de desserte et chaque configuration d'autorisation préalable configurée parmi les multiples configurations d'autorisation préalable configurée comportant un indice de configuration correspondant identifiant la configuration d'autorisation préalable configurée ;
décoder une deuxième signalisation RRC, la deuxième signalisation RRC comportant des configurations de canal logique pour des canaux logiques respectifs, chaque canal logique étant configuré avec une liste de configurations d'autorisation préalable configurée permises parmi les multiples configurations d'autorisation préalable configurée, chacune des configurations d'autorisation préalable configurée permises étant identifiée par l'indice de configuration correspondant, la deuxième signalisation RRC comportant en outre un élément d'information du type Configuration de Canal Logique ;
et
coder un canal physique partagé en liaison montante, noté PUSCH, pour une transmission en UL au moyen d'une des configurations d'autorisation préalable configurée permises,
l'élément d'information du type Configuration de Canal Logique comportant en outre une valeur de priorité stipulant une priorité d'une autorisation préalable dynamique, notée DG, pour l'UE.

11. Support lisible par ordinateur selon la revendication 10, la première signalisation RRC comportant en outre un élément d'information du type Configuration d'Autorisation Préalable Configurée correspondant à l'une des multiples configurations d'autorisation préalable configurée.

12. Support lisible par ordinateur portant des instructions destinées à être exécutées par un ou plusieurs processeurs d'un Node-B de prochaine génération, noté gNB, les instructions servant à configurer le gNB pour une transmission à autorisation préalable configurée en liaison montante, notée UL, améliorée prenant en charge de multiples configurations d'autorisation préalable configurée dans un réseau de communication 5G-New Radio, noté NR, et pour amener le gNB à :
coder une première signalisation sous protocole de contrôle des ressources radio, noté RRC, en vue de sa transmission à un équipement utilisateur, noté UE, la première signalisation RRC comportant les multiples configurations d'autorisation préalable configurée pour une unique partie de bande passante, notée BWP, d'une cellule de desserte du gNB, et chaque configuration d'autorisation préalable configurée parmi les multiples configurations d'autorisation préalable configurée comportant un indice de configuration correspondant identifiant la configuration d'autorisation préalable configurée ;
coder une deuxième signalisation RRC en vue de sa transmission à l'UE, la deuxième signalisation RRC comportant des configurations de canal logique pour des canaux logiques respectifs, chaque canal logique étant configuré avec une liste de configurations d'autorisation préalable configurée permises parmi les multiples configurations d'autorisation préalable configurée, chacune des configurations d'autorisation préalable configurée permises étant identifiée par l'indice de configuration correspondant, la deuxième signalisation RRC comportant en outre un élément d'information du type Configuration de Canal Logique ; et
décoder un canal physique partagé en liaison montante, noté PUSCH, associé à une transmission en UL depuis l'UE, la transmission en UL utilisant l'une des configurations d'autorisation préalable configurée permises, l'élément d'information du type Configuration de Canal Logique comportant en outre une valeur de priorité stipulant une priorité d'une autorisation préalable dynamique, notée DG, pour l'UE.
